# EUROPEAN PATENT SPECIFICATION

(11) **EP 2 395 274 B1**
(45) Date of publication and mention of the grant of the patent: **22.04.2015**
(21) Application number: 11168928.7
(22) Date of filing: 07.06.2011
(51) Int. Cl.: F16P 3/14

(54) **Dynamically adaptable safety zones**
Dynamisch anpassbare Sicherheitszonen
Zones de sécurité dynamiquement adaptables

(30) Priority: 08.06.2010 US 795878
(43) Date of publication of application: 14.12.2011
(73) Proprietor: Rockwell Automation Technologies, Inc., Mayfield Heights, OH 44124 (US); Cedes Safety & Automation AG, 7302 Landquart (CH)
(72) Inventor: Hardegger, Martin, 7320 Sargans (CH); Berner, Reto, 5000 Aarau (CH); Galera, Richard, Nashua, NH New Hampshire 3062 (US); Nair, Suresh, Amherst, NH New Hampshire 03031 (US); Chen, Wei Jie, Westford, MA Massachusetts 01886 (US); Meinherz, Carl, 7208 Malans (CH); Brockman, Craig Martin, Windham, NH New Hampshire 03087 (US); Fooks, Elik I., Lexington, MA Massachusetts 12173 (US); Stein, Manfred, 7013 Domat/Ems (Graubünden) (CH); Black, Robert M., Bolton, MA Massachusetts 01740 (US); Merz, Roger, 8805 Richterswil (CH); Eisenbrown, Steven A., South Russell, OH Ohio 44022 (US)
(74) Representative: Grünecker Patent- und Rechtsanwälte PartG mbB

(56) References cited:
- EP-A1- 1 892 456
- EP-A1- 2 169 501
- EP-A2- 1 306 603
- DE-A1-102005 011 143
- US-A1- 2006 049 939

## Description

### TECHNICAL FIELD

The claimed subject matter relates generally to industrial control systems and more particularly to systems and methods that employ time of flight sensing to automatically adjust safety zone regions for industrial environments.

### BACKGROUND

Safety instrumented systems have been employed for many years in industrial environments to perform safety instrumented functions for various industries. If such instrumentation is to be effectively used for safety instrumented functions, it is essential that this instrumentation achieves certain minimum standards and performance levels in order to facilitate safe operation of equipment and more importantly the personnel who interact with the equipment. In one case, international standards have addressed the application of safety instrumented systems for process industries and machine safety industries. It also requires a process hazard and risk assessment to be carried out to enable the specification for safety instrumented systems to be derived. Other safety systems are considered so that their contribution can be taken into account when considering the performance requirements for machine safety. The safety instrumented system generally includes all components and subsystems necessary to carry out the safety instrumented function from sensor(s) to final element(s).

The typical safety instrumented system is often designed with predetermined static safety zones where sensors are employed to detect whether people or machines have entered the zones. If such entry into the zone is detected, the equipment operation may be altered or disabled completely. Generally, the international standard has two concepts which are fundamental to its application; safety lifecycle and safety integrity levels. This addresses safety instrumented systems which are based on the use of electrical/electronic/programmable electronic technology. Where other technologies are used for logic solvers, the basic principles of this standard should be applied. This standard also addresses the safety instrumented system sensors and final elements regardless of the technology used.

In most situations, safety is best achieved by an inherently safe process design whenever practicable, combined, if necessary, with a number of protective systems which rely on different technologies (e.g., chemical, mechanical, hydraulic, pneumatic, electrical, optical, optoelectronic, electronic, programmable electronic) which address any residual identified risk. Any safety strategy should consider each individual safety instrumented system in the context of other protective systems. To facilitate this approach, this standard: requires that a hazard and risk assessment is carried out to identify the overall safety requirements; requires that an allocation of the safety requirements to the safety instrumented system(s) is carried out; works within a framework which is applicable to all instrumented methods of achieving functional safety; and details the use of certain activities, such as safety management, which may be applicable to all methods of achieving functional safety.

There are various examples of safety zones which are typically monitored by two-dimensional sensors that have difficulties in acquiring the information which is needed to initiate the most suitable action. For example, a light curtain protecting a door detects whether someone is in the door or not. As long as the person is in the door, it does not close as it does not matter if the person in the door moves out of it, such that they would not be in the gap any more, when the door would be closed. In another case, a door open sensor which detects people in front of a door opens it, independent of the direction of movement of the person as again it does not matter if they move toward or away from the door. In certain light curtain applications they are combined with another sensor which supervises the zone in front of the protective field. One example is an application in hospitals, where nurses move beds into elevators. It is difficult to push the elevator button in order to open the door, walking around the bed and moving it into the elevator before the doors close again. Thus, the sensor which supervises the zone in front of the door detects the bed and initiates that the doors open. In machine applications, light curtains cause a machine stop as soon as they are interrupted. They must be mounted so far from the hazardous area, which with the maximal possible speed of a finger, arm, or body, where the hazardous area cannot be reached before the machine is stopped.

In yet another application, current solutions are using mechanical fences around a machine with clear defined access points/areas. Those access points are either protected by safety light curtains that detect if someone is reaching into the predefined danger zone or are using gates with door interlocking devices. Alternative technologies utilize safety scanners that are detecting a danger zone around a machine or a moving part. Newer technologies such as safety cameras are monitoring an area around a machine from above. In both cases, scanners and cameras, the monitored areas have to be predefined (configured) to detect if someone or something is entering the preconfigured zone. This zone is always fixed, independent of machine mode or speed. Protecting human beings or machinery equipment from moving parts of a machine (e.g., robot arm, and so forth) requires today special fixtures (e.g., mechanical fences) or optoelectronic devices (e.g., Safety Light Curtains, Safety Scanners) that are monitoring a predefined area of operation or access. The goal is to avoid or to detect if someone or something is entering this predefined area, where detection can result in a shut down of the machine.

With this traditional methodology, expensive hardware may be used in a very static manner that does not allow adapting the protective solution to a changed machine position or machine operating mode or it requires time-consuming readjustment of the installed equipment to a new defined protection area. Such static safety zones also do not account for the movements of operators or machines that approach a given area and thus the zones generally have to be increased to account for potential worst case scenarios. Such restrictions on movement or area or safety zone configuration have negative economic implications for industry. US 2006/0049939 A1 relates to systems and methods for control of at least one safety-relevant function of a machine having a machine control for the control of the movements of the machine, having at least one sensor for the sensing of an object inside a monitored zone and having an evaluation unit for the setting of a danger zone and for the triggering of the safety-relevant function on the intrusion of the sensed object into the danger zone. To set the danger zone, the evaluation unit is coupled to the machine control and the evaluation unit is designed for the derivation of the parameters required for the setting of the danger zone starting from the control signals used by the machine control for the movement control of the machine.

EP 1 306 603 A2 relates to systems and method for controlling at least one security function of a machine in which a surveillance area is monitored by at least one sensor and a monitoring area includes a safety limit, above which the safety function is triggered.

DE 10 2005 011 143 A1 relates to an apparatus and a method for controlling at least one security function of a robot or a machine tool having at least one position sensitive sensor, especially a camera to monitor a security area of the robot or the machine tool, an evaluation unit for processing the essential data, and means for triggering the safety function with a penetration of an illegal object in the security area.

EP 2 169 501 A1 discloses a method of navigating an unmanned vehicle comprising the steps of: detecting an animal, determining whether a current course of the unmanned vehicle will lead to a collision with the animal. If this is the case, the method continues by: determining at least a first priority parameter from a set of priority parameters, wherein the first priority parameter is a standing condition of the detected animal, deciding, on the basis of the set of priority parameters, whether the course of the unmanned vehicle will be adjusted to avoid the animal, wherein the course will be maintained if the set of priority parameters meets a predetermined collision criterion, and the course will be adjusted to avoid the animal if the set of priority parameters does not meet the predetermined collision criterion; wherein the set of priority parameters only meets the collision criterion if at least the standing condition is that the animal is standing.

EP 1 892 456 A1 discloses a work station. Immediately before a robot starts to move at a high speed, a monitoring area is expanded in a returning direction, and absence of an obstacle in the monitoring area is confirmed. During the high speed movement of the robot, the monitoring area is expanded forward, so that a safety of an operator is secured, an effective use of a working station area can be made, and an improvement of productivity can be achieved.

### SUMMARY

The object of the present invention is to provide a system and a method for accurately defining a safety zone in an industrial automation environment.

This object is solved by the subject matter of the independent claims.

Preferred embodiments are defined by the dependent claims.

The following summary presents a simplified overview to provide a basic understanding of certain aspects described herein. This summary is not an extensive overview nor is it intended to identify critical elements or delineate the scope of the aspects described herein. The sole purpose of this summary is to present some features in a simplified form as a prelude to a more detailed description presented later.

Dynamically adjustable safety zones are provided to facilitate protection of people and machinery in an industrial environment. In one aspect, safety zones are monitored via one or more time-of-flight (TOF) sensors in order to detect movement toward the zones. On fast approaching objects that include people or machines, the area or other dimension of the safety zone can be increased in order that equipment operation can be altered or disabled in view of such detected movement. On detecting slower objects approaching the respective zone, the area or other dimension (e.g., distance) can be decreased as logic detection would have more time to consider whether or not a safety shut-down event or other safety operation should occur.

Generally, since the protective field position monitored by the TOF sensor(s) is dependent on the speed and direction of object movement, the distance to the hazardous area can be very short if the movement is not toward the respective zone. It is similar if the speed is very slow. For example, at a press with manual changing, this is a consideration since the operator does not need to move long distances. Thus, the machine can be started as soon as the operator leaves the hazardous area and as long as he does not move towards the machine. By sensing additional dimensions such as speed and direction, various economic benefits can be realized as shorter safety distances can be realized to facilitate lower space requirements, lower building costs, shorter distances for the operator to move, faster machine cycles, and lower part costs.

In a related aspect, safety regions are monitored and adjusted based on detected movements of a machine or in relation to portions of a machine. Thus, if a machine part such as a robotic arm was moving in a faster motion, the zone around the arm can be dynamically increased. Thus, it is possible to eliminate or minimize the use of traditional monitoring and protective equipment by creating a dynamic, adjustable safety zone which depends on the position and the operating mode of the machine. The result can be achieved by applying optoelectronic sensing devices based on TOF technology which is coupled to an integrated speed monitoring device. The sensing technology is applied on the moving device of the machine. If the mobile part of a machine is moving in any direction the sensing device will move along and adjust the safe zone. If the mobile part is moving fast, the safe zone can be automatically expanded, if the mobile part is moving slower, the safe zone can be decreased.

To the accomplishment of the foregoing and related ends, the following description and annexed drawings set forth in detail certain illustrative aspects. These aspects are indicative of but a few of the various ways in which the principles described herein may be employed. Other advantages and novel features may become apparent from the following detailed description when considered in conjunction with the drawings.

### BRIEF DESCRIPTION OF THE DRAWINGS

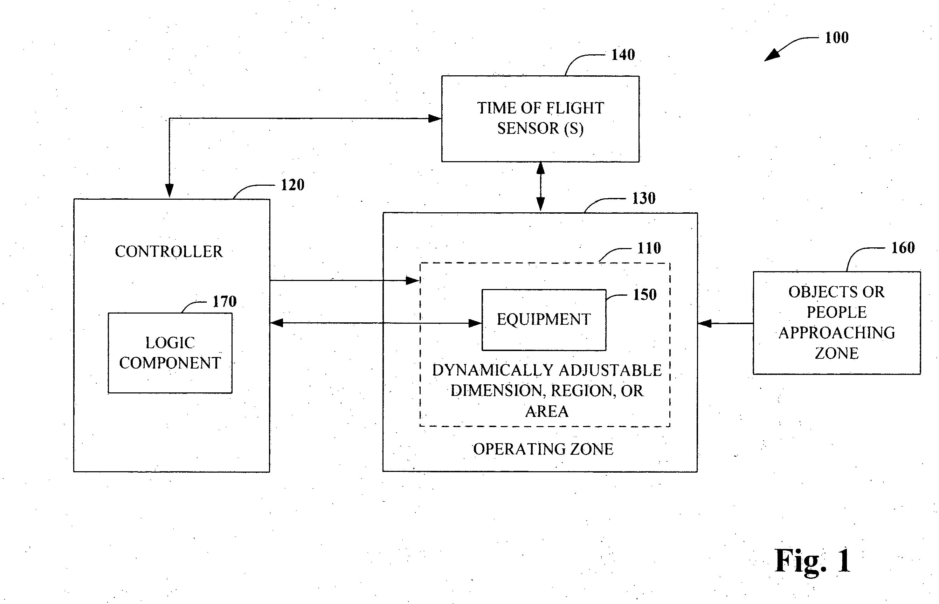

Fig. 1 is a schematic block diagram illustrating dynamically adjustable safety zone for an industrial control environment.
Fig. 2 is a prior art diagram illustrates a static safety zone application.
Fig. 3 illustrates examples of a dynamically adjustable safety zone.
Fig. 4 illustrates alternative safety zone monitoring via time of flight sensors.
Fig. 5 illustrates applying a dynamically adjustable safety zone to a moving machine in view of stationary objects.
Fig. 6 is a flow diagram illustrating a process for creating and defining a dynamically adjustable safety zone.
Fig. 7 is an alternative system that applies dynamically adjustable safety zones to moving components of a machine.
Fig. 8 is an alternative system example that applies dynamically adjustable safety zones to moving components of a machine.
Fig. 9 is a flow diagram illustrating a process for creating and defining a dynamically adjustable safety zones for moving components of a machine.
Figs. 10-12 illustrate example time of flight sensor concepts.

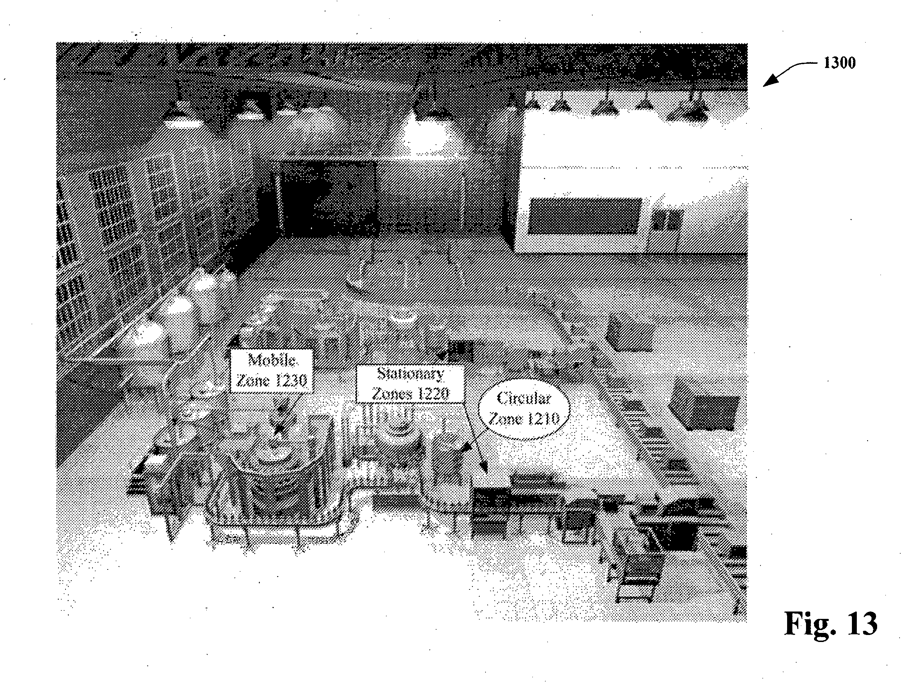

Fig. 13 illustrates an example factory where dynamically adjustable safety zones are applied.

### DETAILED DESCRIPTION

A dynamically adjustable safety zone is provided for industrial control applications. In one aspect, systems and methods are provided for defining a safety zone in an industrial automation environment. The method includes monitoring an object that approaches an operating zone where equipment is controlled within the operating zone. This includes determining the speed or direction that the object approaches the operating zone. The method includes dynamically adjusting a safety region in view of the determined speed or direction of the object and enabling or disabling the equipment within the operating zone based in part on the object entering the safety region.

Referring initially to **Fig**. **1**, a system 100 illustrates a dynamically adjustable safety zone 110 for an industrial control environment. The system 100 includes a controller 120 that monitors an operating zone via one or more time of flight (TOF) sensors 140. It is noted that the controller 120 can also be included in the TOF sensor itself, whereas the controller does not have to be a stand alone controller. Equipment 150 within the operating zone 130 is also operated by the controller 120 although it is to be appreciated that a separate controller could be employed for the equipment 150 and another controller employed for dynamically adjusting safety regions within the zone 130. As shown, the safety zone 110 includes a dynamically adjustable dimension, region, or area that can be adjusted according to multiple dimensions or directions as will be described in more detail below. As objects (or people) 160 approach the operating zone 130, the TOF sensors 140 detect the speed or direction of the objects that is computed and determined by the controller 120.

In general, the TOF sensors 140 employ infrared beams that are radiated at the objects 160, where reflections from the beams are received or measured as phase shifted components to determine speed, direction or other movements. For example, if the object 160 is detected as approaching the operating zone 130 in a rapid manner, the TOF sensor 140 detects the movement and the controller 120 automatically adjusts the safety zone. In this example, for high-speed movements, the safety zone 110 can be increased in one or more directions (e.g., up, down, sideways, frontwards, backwards, and so forth). If the approaching object 160 happens to enter the adjusted safety zone area 110, then the controller 120 can alter the operation of the equipment 150 such as disabling the equipment or entering some other state such as standby mode. If the object is detected as moving slower or in a different direction, then the safety zone 110 can be automatically decreased as will be shown and described in more detail below. As shown, the controller 120 can include one or more logic components 170 for computing speed, distance, dynamic parameters, in addition to facilitate monitoring the zones 110 and 130 while controlling the equipment 150. In another aspect, the controller 120 may be exclusively employed for adjusting the dimension of the safety zone 110. Other control features such hardwired logic may be employed to automatically disable the equipment 150 for objects 160 that have entered the safety zone 110.

In general, the system 100 provides dynamically adjustable safety zones to facilitate protection of people and machinery in an industrial environment. In one aspect, safety zones 110 are monitored via one or more time-of-flight (TOF) sensors 140 in order to detect movement toward the zones. On fast approaching objects 160 that include people or machines, the area or other dimension of the safety zone 110 can be increased in order that equipment operation can be altered or disabled in view of such detected movement. On detecting slower objects 160 approaching the respective zone 110 or 130, the area or other dimension (e.g., distance) can be decreased as logic detection would have more time to consider whether or not a safety shut-down event or other safety operation should occur.

Generally, since the protective field position monitored by the TOF sensor(s) 140 is dependent on the speed and direction of object 160 movement, the distance to the hazardous area can be very short if the movement is not toward the respective zone. It is similar if the speed is very slow. For example, at a press with manual changing, this is a consideration since the operator does not need to move long distances. Thus, the machine can be started as soon as the operator leaves the hazardous area and as long as he does not move towards the machine. By sensing additional dimensions such as speed and direction, various economic benefits can be realized as shorter safety distances can be realized to facilitate lower space requirements, lower building costs, shorter distances for the operator to move, faster machine cycles, and lower part costs.

In a related aspect, safety regions or zones 110 are monitored and adjusted based on detected movements of a machine or in relation to portions of a machine. Thus, if a machine part such as a robotic arm was moving in a faster motion, the zone around the arm can be dynamically increased. Thus, it is possible to eliminate or minimize the use of traditional monitoring and protective equipment by creating a dynamic, adjustable safety zone 110 which depends on the position and the operating mode of the machine. The result can be achieved by applying optoelectronic sensing devices based on TOF technology which is coupled to an integrated speed monitoring device. The sensing technology can be applied on the moving device of the machine. If the mobile part of a machine is moving in any direction the sensing device will move along and adjust the safe zone. If the mobile part is moving fast, the safe zone can be automatically expanded, if the mobile part is moving slower, the safe zone can be decreased. In another aspect, an acceleration sensor can be employed with (or within) the TOF sensor to distinguish the speed of the moving part.

In another aspect, an industrial control system 100 is employed to monitor and control a safety zone 110. This includes the controller 120 that monitors objects 160 that approach an operating zone 130 where equipment 150 is controlled within the operating zone. A time of flight sensor 140 determines the speed or direction that the objects 160 approach the operating zone 130. A logic component 170 associated with the controller 120 is employed to automatically adjust a safety region 110 in view of the determined speed or direction of the objects 160. The controller 120 enables or disables the equipment 150 within the operating zone 130 based in part on the object entering the safety region 110. The controller 120 interacts with multiple time of flight sensors 140 to monitor multiple dimensions for the operating zone, where the dimensions include movements toward the operating zone, movements away from the operating zone, movements from above or below the operating zone, or movements to the sides or circumference of the operating zone as will be described in more detail below. The controller 120 can also monitor motion of a portion of the equipment 150 to dynamically adjust safety regions 110 within the operating zone 130 based on speed or direction of the portion of the equipment 150. The controller can interact with the machine to receive information about the machine speed, position and next movements and can check this information with the scenery or background. The controller 120 can also monitor moving equipment and dynamically adjusts the safety zone 110 as the moving equipment approaches other objects. The controller 120 can also dynamically adjust the safety region 110 based on an operating mode of a machine. It is noted that different type zones can be configured. For example, this can include a warning zone where warning is shown, a slow down zone where communication to the machine to reduce the speed, a switch off zone, and so forth. This can include a plurality of different designations and control actions depending on the configuration of the zone or zones. In another aspect, machine interactions can be determined. For example, the machine determines the TOF sensor or the controller on the area the machine is working the speed, and which movements may next occur. With this determination, the safety zone can adapted accordingly.

In another aspect, an industrial control system 110 is employed to monitor and control a safety zone 110. This includes means for monitoring objects (controller 120) that approach an operating zone 130 where equipment 150 is controlled within the operating zone. This also includes means for determining (TOF sensor 140) the speed or direction that the objects 150 approach the operating zone 130. The system 100 also includes means for adjusting (logic component 170) a safety region 110 in view of the determined speed or direction of the objects. The system 100 can also include a component (e.g., controller 120 or separate control device) to alter operation of the equipment within the operating zone based in part on the object entering the safety region.

It is noted that components associated with the industrial control system 100 can include various computer or network components such as servers, clients, controllers, industrial controllers, programmable logic controllers (PLCs), energy monitors, batch controllers or servers, distributed control systems (DCS), communications modules, mobile computers, wireless components, control components and so forth that are capable of interacting across a network. Similarly, the term controller or PLC as used herein can include functionality that can be shared across multiple components, systems, or networks. For example, one or more controllers can communicate and cooperate with various network devices across the network. This can include substantially any type of control, communications module, computer, I/O device, sensors, Human Machine Interface (HMI) that communicate via the network that includes control, automation, or public networks. The controller can also communicate to and control various other devices such as Input/Output modules including Analog, Digital, Programmed/Intelligent I/O modules, other programmable controllers, communications modules, sensors, output devices, and the like.

The network can include public networks such as the Internet, Intranets, and automation networks such as Control and Information Protocol (CIP) networks including DeviceNet and ControlNet. Other networks include Ethernet, DH/DH+, Remote I/O, Fieldbus, Modbus, Profibus, wireless networks, serial protocols, and so forth. In addition, the network devices can include various possibilities (hardware or software components). These include components such as switches with virtual local area network (VLAN) capability, LANs, WANs, proxies, gateways, routers, firewalls, virtual private network (VPN) devices, servers, clients, computers, configuration tools, monitoring tools, or other devices.

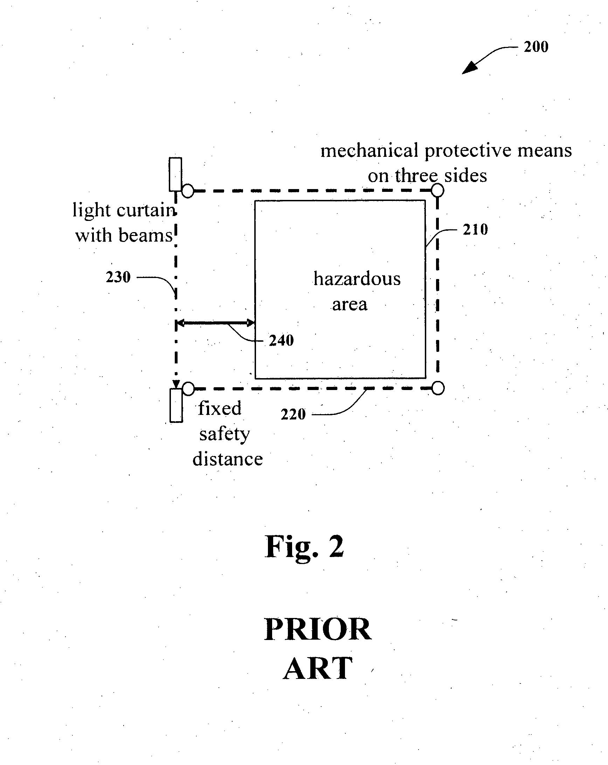

Turning now to **Fig. 2**, a prior art diagram illustrates a static safety zone application 200. In this application, a hazardous area 210 is protected by mechanical protective means 220 on three sides. In machine applications, light curtains 230 cause a machine to stop as soon as they are interrupted. Safety light curtains 230 are most simply described as photoelectric presence sensors specifically designed to protect plant personnel from injuries related to hazardous machine motion. Also known as AOPDs (Active Opto-electronic Protective Devices), light curtains offer optimal safety, yet they allow for greater productivity and are the more ergonomically sound solution when compared to mechanical guards. They are ideally suited for applications where personnel need frequent and easy access to a point of operation hazard. Safety light curtains consist of an emitter and receiver pair that creates a multi-beam barrier of infrared light in front of, or around, a hazardous area 210. When any of the beams are blocked by intrusion in the sensing field, the light curtain control circuit sends a signal to the machine's e-stop. The emitter and receiver can be interfaced to a control unit that provides the necessary logic, outputs, system diagnostics and additional functions (muting, blanking, PSDI) to suit the application. When installed alone, the light curtain pair will operate as a control reliable switch.

As shown, the light curtain 230 defines a fixed distance 240 from the area 210. The curtains 230 must be mounted so far from the hazardous area 210, which with the maximal possible speed of a finger, arm or body, the hazardous area cannot be reached before the machine is stopped. This static arrangement must be preconfigured for worst-case movements into the area 210 which causes excess dead-space which in effect leads to inefficient use of resources and ultimately economic waste. As will be described in more detail below, the fixed distance 240 can be reduced by dynamically detecting movement toward the hazardous area 210.

It is noted that in one aspect, light curtains 230 can be employed with the dynamically adjustable zones that are described herein. For instance, a light curtain direction may be employed to monitor one dimension or direction and a time of flight sensor may be employed to monitor an alternative direction. In yet another aspect, the TOF sensor may be employed as an inner control of the hazardous are 210 whereas the light curtain 230 is employed as an outer region control that merely activates the dynamic inner control. As can be appreciated, various combinations of sensors can be employed.

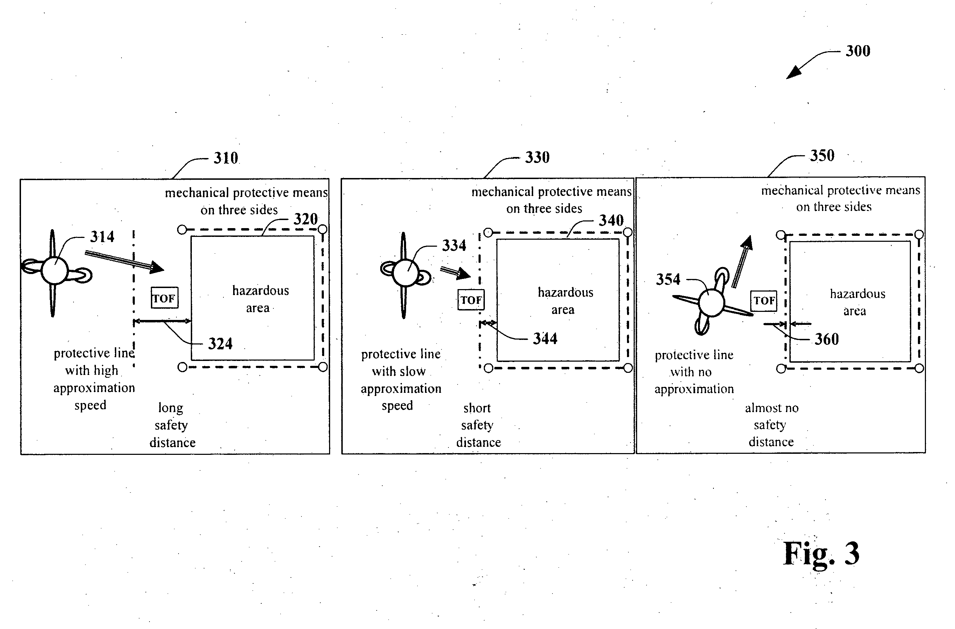

**Fig. 3** illustrates examples of a dynamically adjustable safety zone 300. At 310 of Fig. 3, a person 314 approaches a hazardous area 320 at a relatively fast speed. As shown, a longer safety distance is established at 324, where a TOF sensor is employed to determine speed and/or distance of the person 314. At 330 of Fig. 3, a person 334 approaches a hazardous area 340 at a slower speed and a shorter safety distance 344 is dynamically situated in front of the hazardous area 340. At 350 of Fig. 3, the logic system determines that a person 354 will miss the respective hazardous area altogether and a minimal safety distance can be dynamically adjusted at 360. As can be appreciated, logic components such as controllers can be configured with a plurality of parameters that guide how safety distances are adjusted. For instance, one parameter could define that if the approaching speed was X meters per second then the safety distance should be adjusted to at least Y meters, where X and Y are positive integers. Other parameters may select operating modes or states that the machine should fall back to in the event a safety zone is intruded upon by an object or person.

Generally, in machine applications, the position at which a person causes a machine stop is dependent of the speed of the person towards the hazardous area. Thus, using a TOF camera with 3D images, for example, the speed and direction of the person can be measured and determined. In door applications, for example, people hurrying towards a door initiate that it opens quickly or earlier than slowly moving people. Persons who do not move towards the door, but who intend to pass by, do not initiate the door to open. In some cases, learning components can be employed to teach the system about operator movement. Thus, start the machine when the operator quits the unsafe zone and enhance machine speed when the operator is safe, i.e., far enough away, where far enough can be defined by parameter configuration in the controller. Since the protective field position defined by the TOF sensor (or sensors) is dependent on the speed and direction of movement, the distance to the hazardous area can be very short if the movement is not toward the respective area. It is similar if the speed is very slow. For example, as noted previously at a press since the operator does not need to move long distances. Thus, the machine can be started as soon as the operator leaves the hazardous area and as long as they do not move toward it. The short safety distance in front of the machine leads to: less space requirements; lower building costs; shorter distances of the operator; faster machine cycles; and lower part costs.

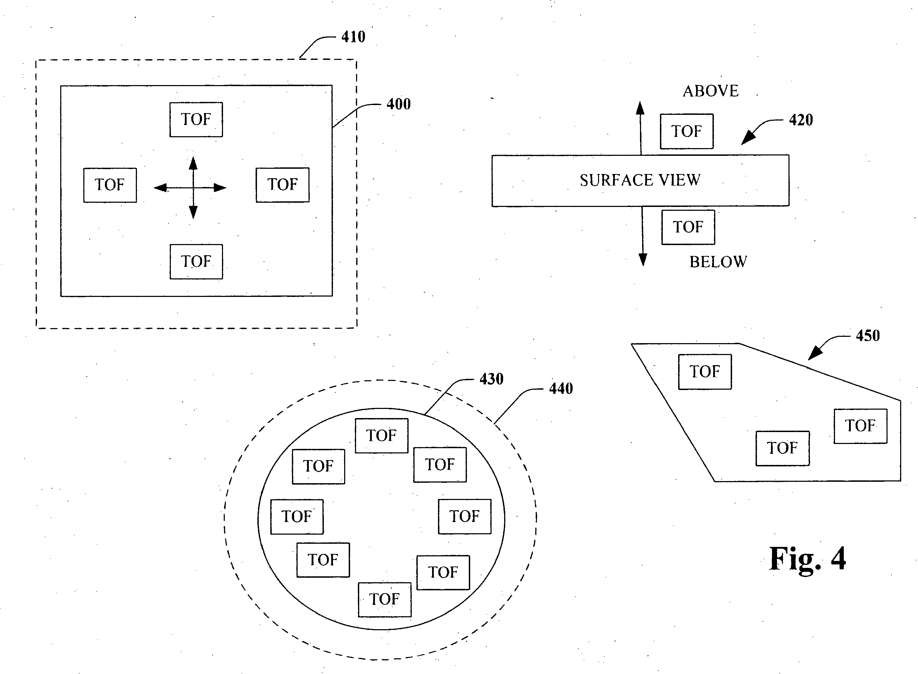

**Fig. 4** illustrates alternative safety zone monitoring via time of flight sensors. In this aspect, various example TOF configurations are illustrated that demonstrate that dynamically adjustable safety zones can be applied to substantially any configuration or dimension. For example, a rectangular operating zone 400 is shown where four time of flight (TOF) sensors are positioned such that the four sides of the rectangle project an adjustable safety zone illustrate at 410. As can be appreciated, TOF sensors can be applied to any shape or direction in order to monitor objects that may be able to approach from the respective direction. In another example, a surface 420 has TOF sensors positioned above and below the surface in order to detect movements above or below the respective operating plane. For example, a work station may occasionally have robotic arms that intrude from above into the space or human hands come into the space for some reason. In yet another example at 430, TOF sensors are positioned circumferentially in order to generate a circular adjustable safety zone illustrated at 440. At 450, TOF is applied to various portions or an irregularly shaped zone.

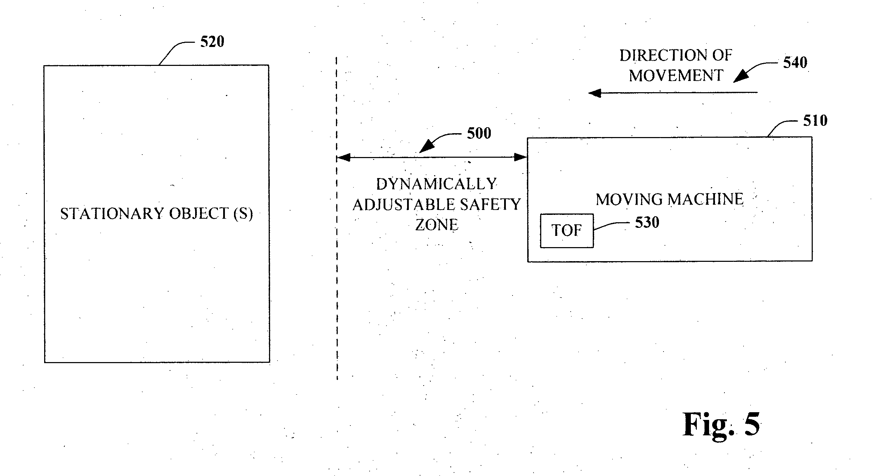

**Fig. 5** illustrates applying a dynamically adjustable safety zone 500 to a moving machine 510 in view of stationary objects 520. In this example, a TOF sensor 530 is positioned in the direction of movement shown at 540. In this example, if the machine 510 approaches the object 520 in a rapid manner (e.g., rapid defined by configuration parameter) then the safety zone 500 can dynamically and automatically be increased. If approaching at a slower speed or at a non-intrusive angle, the safety zone 500 can be decreased. As can be appreciated, other TOF sensors can be applied to the machine 510 to account for other movements and directions of motion for the machine. Similar to Fig. 4 discussed above, the TOF sensors can be mounted on irregularly shaped machines have different sizes and dimensions, where the mountings can occur in each location where a potential machine movement may occur.

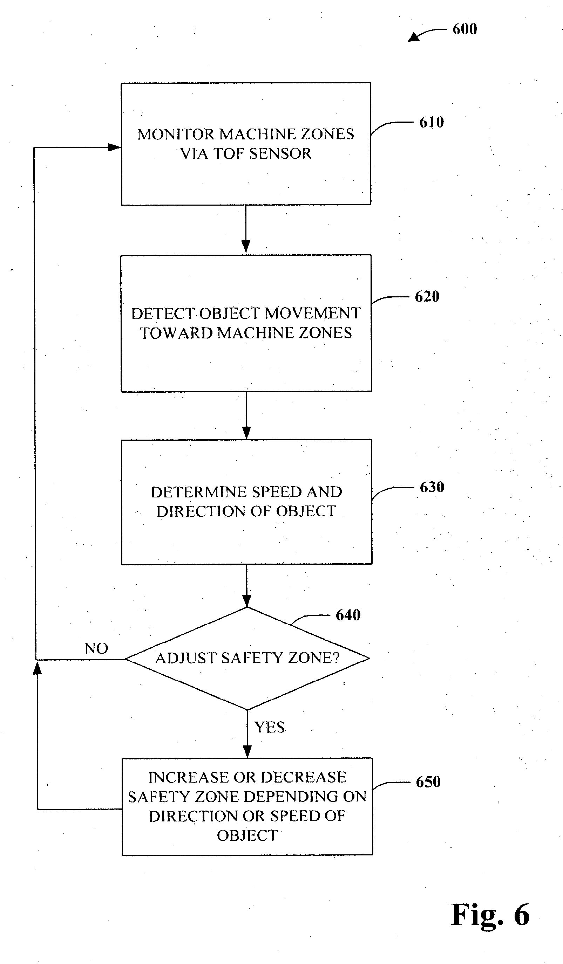

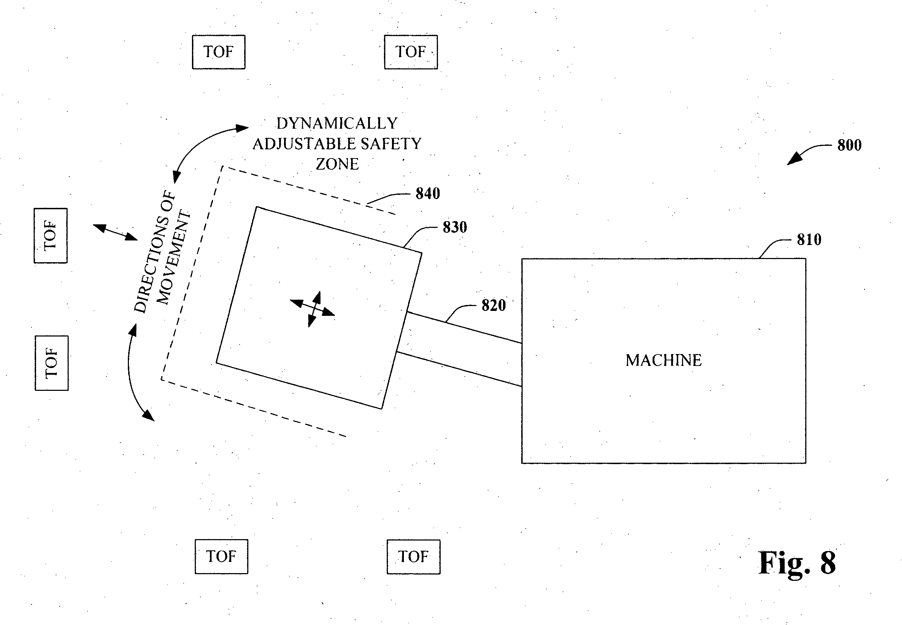

**Fig. 6** is a flow diagram 600 illustrating a process for creating and defining a dynamically adjustable safety zone. Fig. 8 which is described below represents an alternative process. While, for purposes of simplicity of explanation, the methodologies are shown and described as a series of acts, it is to be understood and appreciated that the methodologies are not limited by the order of acts, as some acts may occur in different orders or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology as described herein.

Proceeding to 610, machine zones are monitored via one or more TOF sensors. As noted previously, TOF sensors can be placed in various directions to provide monitoring from multiple directions or dimensions. At 620, object (or people) movement is detected toward the machine zones. In general, this includes infrared techniques that measure the time light travels a given distance as will be described in more detail below. Also, it is to be appreciated that various types of TOF sensing can be employed in different mediums such as fluid or air, where the respective TOF types are also described in more detail below. At 630, speed and/or direction of the approaching object is determined. This can include logical computations at a controller or integrated microprocessor chip that is described in more detail below. Upon determining the speed and direction of the approaching object at 630, a determination is made at 640 as to whether or not to dynamically adjust the respective safety zone. For example, a threshold can be set or configured. If the detected speed is above a given threshold, the safety zone can be increased at 650. If the detected speed is below the given threshold, the safety zone can be decreased at 650. If no movement is detected at 640, the process proceeds back to 610 to monitor machine zones via the TOF sensors.

In another aspect, the method 600 includes defining a safety zone in an industrial automation environment. This includes monitoring an object that approaches an operating zone where equipment is controlled within the operating zone; determining the speed or direction that the object approaches the operating zone; dynamically adjusting a safety region in view of the determined speed or direction of the object; and enabling, altering, or disabling the equipment within the operating zone based in part on the object entering the safety region. The method employs at least one time of flight sensor to determine the speed or direction that the object approaches the safety zone. This includes employing multiple time of flight sensors to monitor multiple dimensions for the operating zone, where the dimensions include movements toward the operating zone, movements away from the operating zone, movements from above or below the operating zone, or movements to the sides or circumference of the operating zone. The method also includes monitoring motion of a portion of the equipment or adjusting safety regions within the operating zone based on speed or direction of the portion of the equipment. This includes monitoring moving equipment and dynamically adjusting a safety zone as the moving equipment approaches other objects or dynamically adjusting the safety region based on an operating mode of a machine. The operating mode includes production mode, standby mode, disabled mode, maintenance mode, and reduced speed mode. The method also includes employing an industrial controller to determine the speed or direction or employing the industrial controller for enabling or disabling the equipment within the operating zone. This also includes utilizing a component of a machine as a center of reference for defining a dynamically adjustable safety zone.

The techniques processes described herein may be implemented by various means. For example, these techniques may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. With software, implementation can be through modules (e.g., procedures, functions, and so on) that perform the functions described herein. The software codes may be stored in memory unit and executed by the processors.

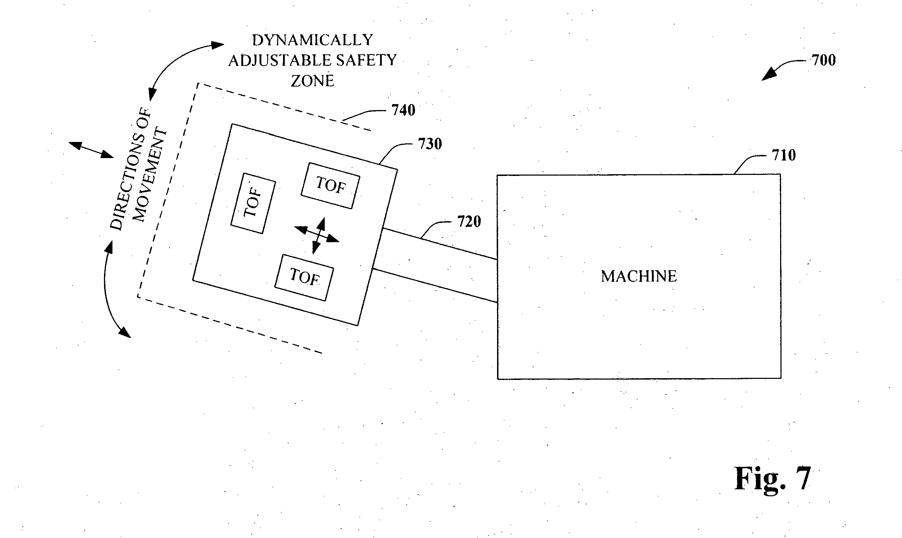

**Fig. 7** is an alternative system 700 that applies dynamically adjustable safety zones to moving components of a machine. At machine 710 operates a robotic arm 720 that provides various degrees of movements. As shown, the arm 720 includes a head 730 where multiple sensors may be employed to define a dynamically adjustable safety zone 740 over the travel of the arm. As can be appreciated, substantially any type of machine, appendage, or movement can be tracked via one or more TOF sensors. Thus, as noted previously, safety regions 740 can be monitored and adjusted based on detected movements of the machine 710 or in relation to portions of a machine 720. Thus, if a machine part such as the robotic arm 720 was moving in a faster motion, the zone around the arm can be dynamically increased. Thus, it is possible to eliminate or minimize the use of traditional monitoring and protective equipment by creating a dynamic, adjustable safety zone which depends on the position and the operating mode of the machine. The result can be achieved by applying optoelectronic sensing devices based on TOF technology which is coupled to an integrated speed monitoring device. The sensing technology is applied on the moving device of the machine. If the mobile part of a machine is moving in any direction the sensing device will move along and adjust the safety zone 740. If the mobile part is moving fast, the safety zone can be automatically expanded, if the mobile part is moving slower, the safety zone can be decreased.

The machine 710 with moving parts/arms 720 creates a virtual space 740 where danger points/areas are moving in space as the machine parts move as well. To continuously monitor this virtual space Time of flight (TOF) sensing devices are built on or around a moving part of a machine. Those TOF devices are mounted in such a way that they can detect in any direction the machine or mobile part moves. A virtual light space can be created. If the moving part would approach something or someone or if someone or something is approaching the mobile part 720 of the machine 710, the TOF device would detect its presence.

Typically, each TOF device sends out one or multiple beams of light. The beams detect the presence of objects within the reach of a predefined distance (e.g., software parameter). The target distance is a result of at least two factors, i) mode of operation of the machine and ii) maximum speed of the machine. In case of 'Run' mode with full speed, target distance can be set to maximum safety distance (x meter). People/objects are detected at the moment the light beam, set at maximum x meters, detects an object. Should the machine 710 work in 'Maintenance/Set up' mode with reduced speed, the target distance can be reduced (distance < x meters) to allow an operator to work closer at the machine.

The system 700 provides an adaptable protection zone 740 where the moving part 720 of the machine 710 creates the center of the zone. Combining the sensing function with the machine mode/operation provides an adjustable dynamic zone protection. This allows machine/operation defined safety zones that are adjustable in a dynamic manner, interconnecting control and sensing functions. This also facilitates elimination of static protection devices such as mechanical fences or fixed safety sensing devices that allows increased and closer interaction with machinery. This will result in less hardware equipment and higher productivity.

**Fig. 8** illustrates an alternative aspect of the TOF system 700 depicted in Fig. 7. In this example, a machine 810 is controls movement via an arm 820 that is attached to a head 830. Rather than the TOF sensors being mounted within a moving portion 830 of the machine 810, the TOF sensors are mounted externally to the machine 810. As can be appreciated, a combination of internal or external sensors can be employed to detect machine movement.

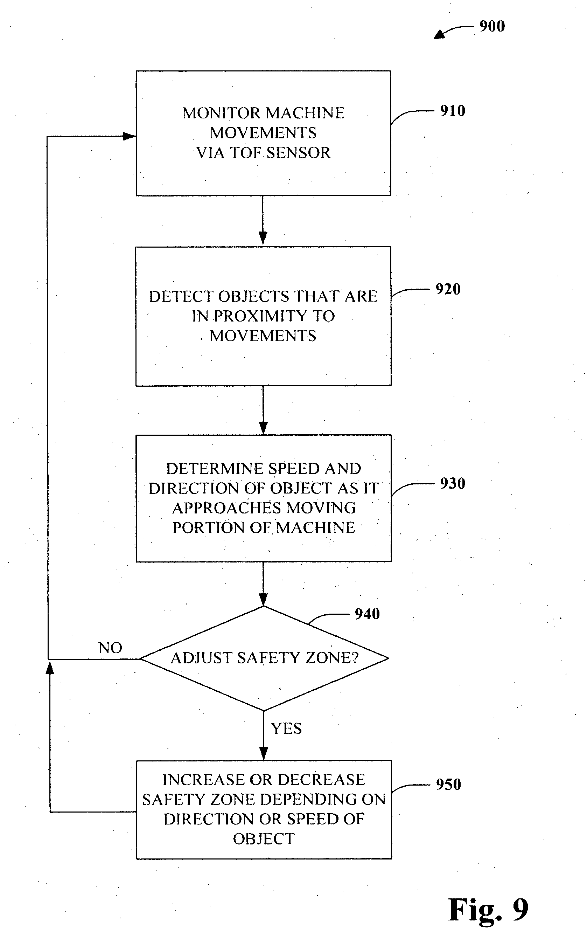

**Fig. 9** is a flow diagram illustrating a process 900 for creating and defining a dynamically adjustable safety zones for moving components of a machine. Proceeding to 910, machine movements are monitored via one or more TOF sensors. As noted previously, TOF sensors can be placed in various directions on the moving portion of the machine to provide monitoring from multiple directions or dimensions. At 920, object (or people) movement is detected that are in proximity and/or direction of the machine movement. In general, this includes infrared techniques that measure the time light travels a given distance as will be described in more detail below. Also, it is to be appreciated that various types of TOF sensing can be employed in different mediums such as fluid or air, where the respective TOF types are also described in more detail below. At 930, speed and/or direction of the object is determined as it approaches the moving portion of the machine. This can include logical computations at a controller or integrated microprocessor chip that is described in more detail below. Upon determining the speed and direction of the approaching object at 930, a determination is made at 840 as to whether or not to dynamically adjust the respective safety zone. For example, a threshold can be set or configured. If the detected speed is above a given threshold, the safety zone can be increased at 950. If the detected speed is below the given threshold, the safety zone can be decreased at 950. If no movement is detected at 940, the process proceeds back to 910 to monitor machine zones via the TOF sensors.

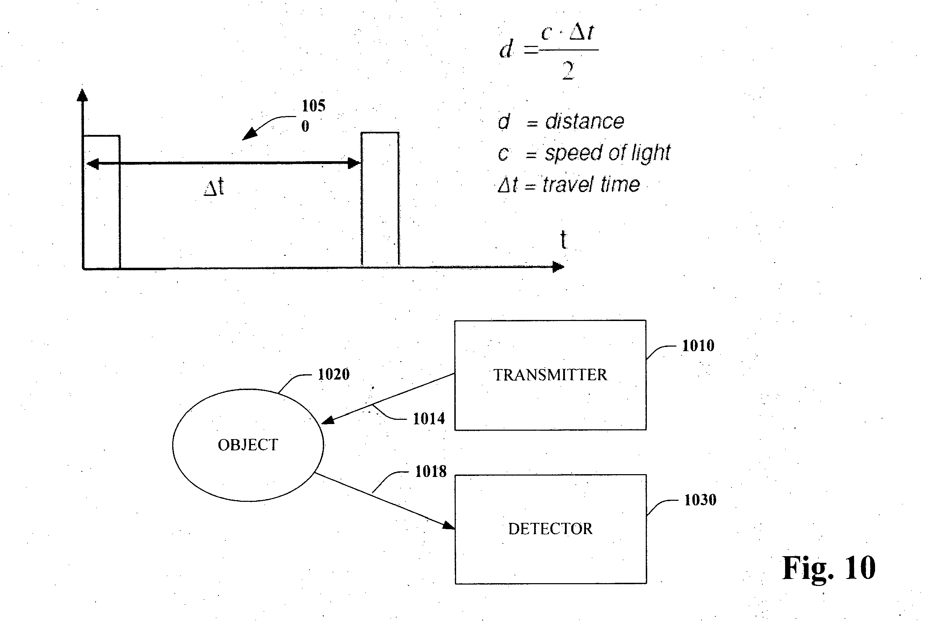

**Figs. 10-12** are discussed collectively and illustrate example time of flight sensor concepts. At 1010 of **Fig. 10**, a transmitter generates an infrared beam (note that this TOF technique works also in the visible spectrum, e.g., red light) 1014 that is reflected at 1018 from an object 1020, where the reflection is received at a detector 1030. The time it takes for the transmitted wave 1014 to be received at the detector 1018 is shown at diagram 1050 that represents delta t. In general, the object distance d can be detected from the equation d = c * delta t/2, where d equals the object distance, c equals the speed of light, and delta t equals the light travel time from transmitter 1010 to detector 1020. It is to be appreciated that other types of TOF measurements are possible as will be described in more detail below.

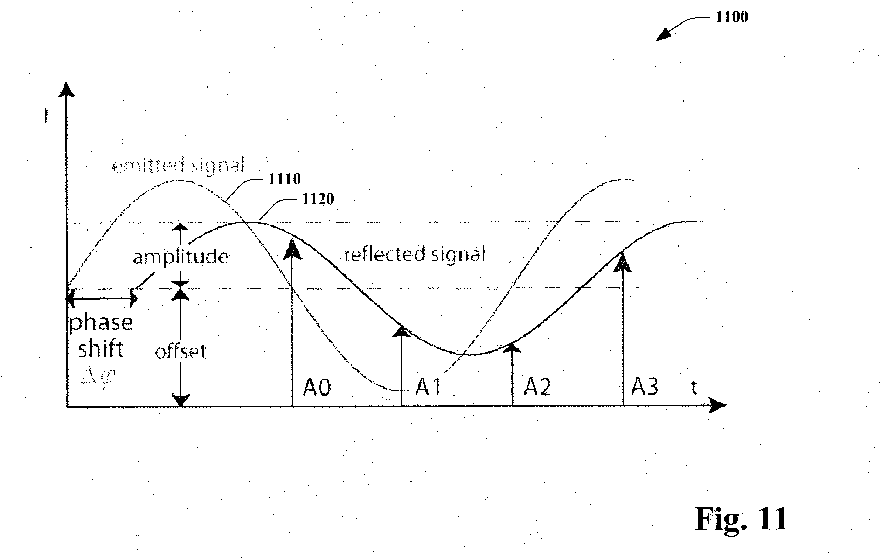

Proceeding to **Fig. 11**, a diagram 1100 illustrates a phase shift between emitted or transmitted signal and received or reflected signal 1120. In general, parameters of phase shift shown as A0, A1, A2, and A3 are employed to compute distance of the respective object shown at 1020 of Fig. 10. In general, object distance is basically proportional to the detected phase shift, basically independent of background illumination, and basically independent of reflective characteristics of the objects. It is noted that this is but one possibility to implement the distance measurement as there are other options and other waveforms.

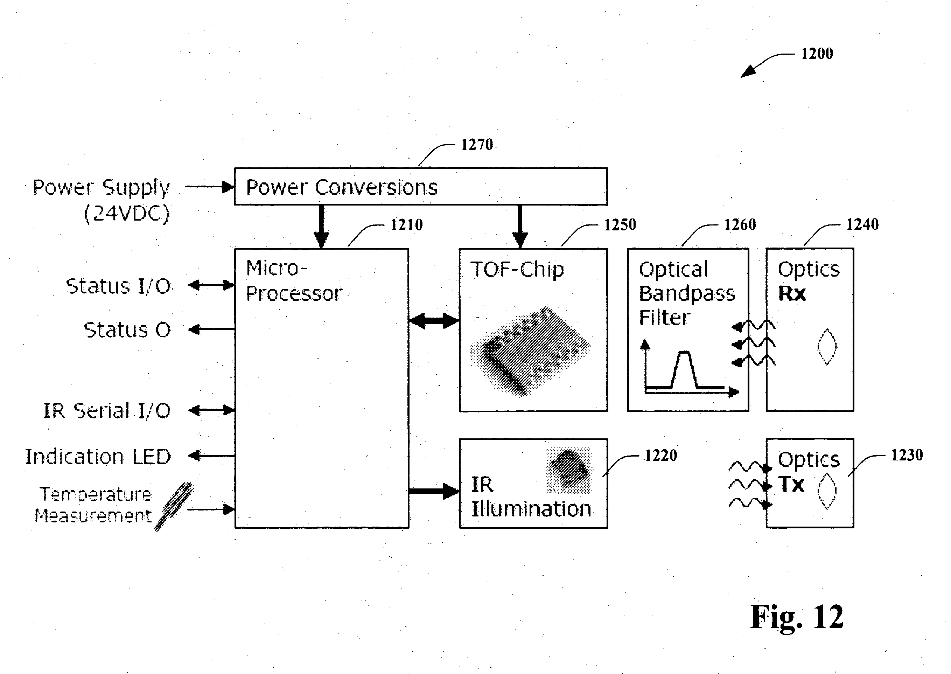

Proceeding to **Fig. 12**, an example circuit 1200 is illustrated for computing object distances and speeds. A microprocessor 1210 generates a modulated signal for a driver for the infrared (IR) illumination at 1220 that is transmitted toward an object via transmitting optics 1230. Reflections from the object are collected via receiving optics 1240 that can in turn be processed via an optical bandpass filter 1250. A time of flight (TOF) chip can be employed 1260 to compute phase shifts and store distance or other data such as color or image data. Output from the TOF chip 1260 can be passed to the microprocessor 1210 for further processing. In the present application, the microprocessor can increase or decrease safety zone regions on stationary equipment, moving equipment, or moving portions of stationary or moving equipment based on the detected distance supplied by the TOF chip 1260. As shown, a power supply 1270 can be provided to generate different operating voltages for the microprocessor 1210 and the TOF chip 1260, respectively.

**Fig**. **13** illustrates an example factory where dynamically adjustable safety zones can be applied. In one example, a circular zone 1310 (similar to that shown in Fig. 4 at 430, 440) can be provided around a boiler in this example. Stationary zones 1320 can be setup where the machinery is stationary and if an object is detected moving toward the stationary machinery that the respective safety zone can be dynamically adjusted based on movement or direction detected. In another example, a mobile zone 1330 is setup where moving portions of equipment is monitored and the safety zone is adjusted when the equipment is moved in relation to other objects or people. In this example at 1330, the moving equipment is a robotic arm. Although not shown, guided vehicles that move on their own can be monitored via TOF sensors similar to that shown in Fig. 5 above. As can be appreciated, a plurality of sites within the factory 1300 can be monitored and controlled for dynamically adjustable safety zones as has been described herein. In some case, combinations of techniques may be employed to satisfy a particular safety solution. This can include dynamic safety zones that are applied to stationary equipment, moving equipment, moving portions of equipment, and/or combinations thereof. The dynamically adjustable safety zone features described herein can also be employed with conventional safety solutions such as light curtains depending on application needs.

It is noted that as used herein, that various forms of Time of Flight (TOF) sensors can be employed to dynamically adjusted safety zones as described herein. These include a variety of methods that measure the time that it takes for an object, particle or acoustic, electromagnetic or other wave to travel a distance through a medium. This measurement can be used for a time standard (such as an atomic fountain), as a way to measure velocity or path length through a given medium, or as a manner in which to learn about the particle or medium (such as composition or flow rate). The traveling object may be detected directly (e.g., ion detector in mass spectrometry) or indirectly (e.g., light scattered from an object in laser Doppler velocimetry).

In time-of-flight mass spectrometry, ions are accelerated by an electrical field to the same kinetic energy with the velocity of the ion depending on the mass-to-charge ratio. Thus the time-of-flight is used to measure velocity, from which the mass-to-charge ratio can be determined. The time-of-flight of electrons is used to measure their kinetic energy. In near infrared spectroscopy, the TOF method is used to measure the media-dependent optical path length over a range of optical wavelengths, from which composition and properties of the media can be analyzed. In ultrasonic flow meter measurement, TOF is used to measure speed of signal propagation upstream and downstream of flow of a media, in order to estimate total flow velocity. This measurement is made in a collinear direction with the flow.

In planar Doppler velocimetry (optical flow meter measurement), TOF measurements are made perpendicular to the flow by timing when individual particles cross two or more locations along the flow (collinear measurements would require generally high flow velocities and extremely narrow-band optical filters). In optical interferometry, the path length difference between sample and reference arms can be measured by TOF methods, such as frequency modulation followed by phase shift measurement or cross correlation of signals. Such methods are used in laser radar and laser tracker systems for medium-long range distance measurement. In kinematics, TOF is the duration in which a projectile is traveling through the air. Given the initial velocity u of a particle launched from the ground, the downward (i.e., gravitational) acceleration and the projectile's angle of projection.

An ultrasonic flow meter measures the velocity of a liquid or gas through a pipe using acoustic sensors. This has some advantages over other measurement techniques. The results are slightly affected by temperature, density or conductivity. Maintenance is inexpensive because there are no moving parts. Ultrasonic flow meters come in three different types: transmission (contrapropagating transit time) flow meters, reflection (Doppler) flowmeters, and open-channel flow meters. Transit time flow meters work by measuring the time difference between an ultrasonic pulse sent in the flow direction and an ultrasound pulse sent opposite the flow direction. Doppler flow meters measure the Doppler shift resulting in reflecting an ultrasonic beam off either small particles in the fluid, air bubbles in the fluid, or the flowing fluid's turbulence. Open channel flow meters measure upstream levels in front of flumes or weirs.

Optical time-of-flight sensors consist of two light beams projected into the medium (e.g., fluid or air) whose detection is either interrupted or instigated by the passage of small particles (which are assumed to be following the flow). This is not dissimilar from the optical beams used as safety devices in motorized garage doors or as triggers in alarm systems. The speed of the particles is calculated by knowing the spacing between the two beams. If there is only one detector, then the time difference can be measured via autocorrelation. If there are two detectors, one for each beam, then direction can also be known. Since the location of the beams is relatively easy to determine, the precision of the measurement depends primarily on how small the setup can be made. If the beams are too far apart, the flow could change substantially between them, thus the measurement becomes an average over that space. Moreover, multiple particles could reside between them at any given time, and this would corrupt the signal since the particles are indistinguishable. For such a sensor to provide valid data, it must be small relative to the scale of the flow and the seeding density. Optical time of flight sensors can be constructed as a 3D camera with a time of flight camera chip.

It is noted that as used in this application, terms such as "component," "module," "system," and the like are intended to refer to a computer-related, electro-mechanical entity or both, either hardware, a combination of hardware and software, software, or software in execution as applied to an automation system for industrial control. For example, a component may be, but is not limited to being, a process running on a processor, a processor, an object, an executable, a thread of execution, a program and a computer. By way of illustration, both an application running on a server and the server can be components. One or more components may reside within a process or thread of execution and a component may be localized on one computer or distributed between two or more computers, industrial controllers, or modules communicating therewith.

The subject matter as described above includes various exemplary aspects. However, it should be appreciated that it is not possible to describe every conceivable component or methodology for purposes of describing these aspects. One of ordinary skill in the art may recognize that further combinations or permutations may be possible. Various methodologies or architectures may be employed to implement the subject invention, modifications, variations, or equivalents thereof. Accordingly, all such implementations of the aspects described herein are intended to embrace the scope of subject claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A method for defining a safety zone in an industrial automation environment, comprising:
monitoring an object and operating zone where equipment is controlled within the operating zone;
determining (630) a speed between the object and the equipment;
determining (630) a direction that the object approaches the operating zone;
determining a speed or direction that a moving part associated with the equipment approaches the object, by employing multiple time of flight sensors;
dynamically adjusting a safety region in view of the determined speed or direction of the object; and
enabling or disabling the equipment within the operating zone based in part on the object entering the safety region **characterized in** employing the multiple time of flight sensors to monitor multiple dimensions for the operating zone, where the dimensions include movements toward the operating zone, movements away from the operating zone, movements from above or below the operating zone, and movements to the sides or circumference of the operating zone, wherein at least one of the sensors is mounted on moving portions (730) of the equipment.

2. The method of claim 1, further comprising monitoring motion of a portion of the equipment.

3. The method of claim 2, further comprising adjusting safety regions within the operating zone based on speed or direction of the portion of the equipment, or
further comprising monitoring moving equipment and dynamically adjusting a safety region as the moving equipment approaches other objects.

4. The method of any one of claims 1 to 3, further comprising dynamically adjusting the safety region based on an operating mode of a machine, and/or
the operating mode includes production mode, standby mode, disabled mode, maintenance mode, and reduced speed mode.

5. The method of any one of claims 1 to 4, further comprising employing an industrial controller to determine the speed or direction, and/or
employing the industrial controller for enabling or disabling the equipment within the operating zone.

6. The method of any one of claims 1 to 5, utilizing a component of a machine as a center of reference for defining a dynamically adjustable safety region.

7. An industrial control system that is employed to monitor and control a safety zone, comprising:
a controller that monitors objects that approach an operating zone where equipment is controlled within the operating zone,
multiple time of flight sensors that determine the speed or direction that the objects approach the operating zone, and
a logic component associated with the controller to automatically adjust a safety region in view of the determined speed or direction of the objects **characterised in that**, the controller interacts with the multiple time of flight sensors to monitor multiple dimensions for the operating zone, where the dimensions include movements toward the operating zone, movements away from the operating zone, movements from above or below the operating zone, and movements to the sides or circumference of the operating zone, wherein at least one of the sensors is mounted on moving portions (730) of the equipment.

8. The industrial control system of claim 9, the controller enables or disables the equipment within the operating zone based in part on the object entering the safety region.

9. The industrial control system of any one of claims 7 to 8, the controller monitors motion of a portion of the equipment, and/or
the controller dynamically adjusts safety regions within the operating zone based on speed or direction of the portion of the equipment, or
the controller monitors moving equipment and dynamically adjusts a safety zone as the moving equipment approaches other objects, or
the controller dynamically adjusts the safety region based on an operating mode of a machine.

10. The industrial control system of claim 7, further comprising a component to alter operation of the equipment within the operating zone based in part on the object entering the safety region.

11. The system of claim 7, wherein at least one time of flight sensor is mounted on moving portions of the equipment.

## Patentansprüche

1. Verfahren zum Definieren einer Sicherheitszone in einer industriellen Automatisierungsumgebung, das umfasst:
Überwachen eines Objektes und einer Betriebszone, wobei eine Einrichtung innerhalb der Betriebszone gesteuert wird;
Bestimmen (630) einer Geschwindigkeit des Objektes und der Einrichtung zueinander;
Bestimmen (630) einer Richtung, in der sich das Objekt der Betriebszone nähert;
Bestimmen einer Geschwindigkeit oder einer Richtung, in der sich ein bewegliches Teil, das mit der Einrichtung verbunden ist, dem Objekt nähert, unter Verwendung mehrerer Laufzeitsensoren;
dynamisches Anpassen eines Sicherheitsbereiches unter Berücksichtigung der bestimmten Geschwindigkeit oder Richtung des Objektes; und
Aktivieren oder Deaktivieren der Einrichtung innerhalb der Betriebszone teilweise basierend darauf, dass das Objekt in den Sicherheitsbereich eintritt, **dadurch gekennzeichnet, dass** die mehreren Laufzeitsensoren eingesetzt werden, um mehrere Dimensionen für die Betriebszone zu überwachen, wobei die Dimensionen Bewegungen auf die Betriebszone zu, Bewegungen von der Betriebszone weg, Bewegungen von oberhalb oder unterhalb der Betriebszone sowie Bewegungen zu den Seiten oder dem Rand der Betriebszone einschließen und wenigstens einer der Sensoren an beweglichen Abschnitten (730) der Einrichtung angebracht ist.

2. Verfahren nach Anspruch 1, das des Weiteren umfasst, dass Bewegung eines Abschnitts der Einrichtung überwacht wird.

3. Verfahren nach Anspruch 2, das des Weiteren umfasst, dass Sicherheitsbereiche innerhalb der Betriebszone auf Basis von Geschwindigkeit oder Richtung des Abschnitts der Einrichtung angepasst werden, oder
des Weiteren umfasst, dass eine sich bewegende Einrichtung überwacht wird und ein Sicherheitsbereich dynamisch angepasst wird, wenn sich die sich bewegende Einrichtung anderen Objekten nähert.

4. Verfahren nach einem der Ansprüche 1 bis 3, das des Weiteren umfasst, dass der Sicherheitsbereich auf Basis eines Betriebsmodus einer Maschine dynamisch angepasst wird, und/oder
der Betriebsmodus Produktions-Modus, Bereitschafts-Modus, Ruhe-Modus, Wartungs-Modus und Modus reduzierter Geschwindigkeit einschließt.

5. Verfahren nach einem der Ansprüche 1 bis 4, das des Weiteren umfasst, dass eine industrielle Steuereinrichtung eingesetzt wird, um die Geschwindigkeit oder Richtung zu bestimmen, und/oder
die industrielle Steuereinrichtung eingesetzt wird, um die Einrichtung innerhalb der Betriebszone zu aktivieren oder zu deaktivieren.

6. Verfahren nach einem der Ansprüche 1 bis 5, wobei eine Komponente einer Maschine als ein Bezugsmittelpunkt zum Definieren eines dynamisch anpassbaren Sicherheitsbereiches genutzt wird.

7. Industrielles Steuerungssystem, das eingesetzt wird, um eine Sicherheitszone zu überwachen und zu steuern, wobei es umfasst:
eine Steuereinrichtung, die Objekte überwacht, die sich einer Betriebszone nähern, wobei eine Einrichtung innerhalb der Betriebszone gesteuert wird;
mehrere Laufzeitsensoren, die die Geschwindigkeit oder Richtung bestimmen, mit/in der sich die Objekte der Betriebszone nähern, und
eine Logik-Komponente, die mit der Steuereinrichtung verbunden ist, um einen Sicherheitsbereich unter Berücksichtigung der bestimmten Geschwindigkeit oder Richtung der Objekte automatisch anzupassen, **dadurch gekennzeichnet, dass** die Steuereinrichtung mit den mehreren Laufzeitsensoren zusammenwirkt, um mehrere Dimensionen für die Betriebszone zu überwachen, wobei die Dimensionen Bewegungen auf die Betriebszone zu,
Bewegungen von der Betriebszone weg, Bewegungen von oberhalb oder unterhalb der Betriebszone sowie Bewegungen zu den Seiten oder dem Rand der Betriebszone einschließen und wenigstens einer der Sensoren an sich bewegenden Abschnitten (730) der Einrichtung angebracht ist.

8. Industrielles Steuerungssystem nach Anspruch 9, wobei die Steuereinrichtung die Einrichtung innerhalb der Betriebszone wenigstens teilweise basierend darauf aktiviert oder deaktiviert, dass das Objekt in den Sicherheitsbereich eintritt.

9. Industrielles Steuerungssystem nach einem der Ansprüche 7 bis 8, wobei die Steuereinrichtung Bewegung eines Abschnitts der Einrichtung überwacht, und/oder die Steuereinrichtung Sicherheitsbereiche innerhalb der Betriebszone auf Basis der Geschwindigkeit oder Richtung des Abschnitts der Einrichtung dynamisch anpasst, oder
die Steuereinrichtung eine sich bewegende Einrichtung überwacht und dynamisch eine Sicherheitszone anpasst, wenn sich die sich bewegende Einrichtung anderen Objekten nähert, oder
die Steuereinrichtung den Sicherheitsbereich auf Basis eines Betriebsmodus einer Maschine dynamisch anpasst.

10. Industrielles Steuerungssystem nach Anspruch 7, das des Weiteren eine Komponente umfasst, die Betrieb der Einrichtung innerhalb der Betriebszone teilweise basierend darauf ändert, dass das Objekt in den Sicherheitsbereich eintritt.

11. System nach Anspruch 7, wobei wenigstens ein Laufzeitsensor an sich bewegenden Abschnitten der Einrichtung angebracht ist.

## Revendications

1. Procédé de définition d'une zone de sécurité dans un environnement d'automatisation industrielle, comprenant :
la surveillance d'un objet et d'une zone de travail où un équipement est commandé dans la zone de travail ;
la détermination (630) de la vitesse entre l'objet et l'équipement ;
la détermination (630) de la direction selon laquelle l'objet s'approche de la zone de travail ;
la détermination de la vitesse ou de la direction selon laquelle une partie mobile associée à équipement s'approche de l'objet, en utilisant des capteurs de temps de vol multiples ;
le réglage dynamique d'une région de sécurité en vue de la vitesse ou de la direction déterminée de l'objet ; et
l'activation ou la désactivation de l'équipement dans la zone de travail en se basant en partie sur l'objet entrant dans la zone de sécurité,
**caractérisé par**
l'utilisation des capteurs de temps de vol multiples pour surveiller les dimensions multiples pour la zone de travail, où les dimensions comportent des mouvements vers la zone de travail, des mouvements s'éloignant de la zone de travail, des mouvements depuis le dessus ou le dessous de la zone de travail et des mouvements vers les côtés ou la circonférence de la zone de travail, dans lequel au moins l'un des capteurs est monté sur des parties mobiles (730) de l'équipement.

2. Procédé selon la revendication 1, comprenant en outre la surveillance du mouvement d'une partie de l'équipement.

3. Procédé selon la revendication 2, comprenant en outre le réglage de régions de sécurité dans la zone de travail sur la base de la vitesse ou de la direction de la partie de l'équipement, ou
comprenant en outre la surveillance de l'équipement et le réglage dynamique d'une région de sécurité lorsque l'équipement mobile s'approche d'autres objets.

4. Procédé selon l'une quelconque des revendications 1 à 3, comprenant en outre le réglage dynamique de la région de sécurité en se basant sur le mode de fonctionnement d'une machine, et/ou
le mode de fonctionnement comporte le mode de fabrication, le mode d'attente, le mode désactivé, le mode de maintenance et le mode à vitesse réduite.

5. Procédé selon l'une quelconque des revendications 1 à 4, comprenant en outre l'utilisation d'un contrôleur industriel pour déterminer la vitesse ou la direction, et/ou
l'utilisation du contrôleur industriel pour activer ou désactiver l'équipement dans la zone de travail.

6. Procédé selon l'une quelconque des revendications 1 à 5, utilisant un composant d'une machine en tant que centre de référence pour définir une région de sécurité réglable de manière dynamique.

7. Système de contrôle industriel utilisé pour surveiller et commander une zone de sécurité, comprenant :
un contrôleur qui surveille des objets s'approchant d'une zone de travail où un équipement est commandé dans la zone de travail ;
des capteurs de temps de vol multiples qui déterminent la vitesse ou la direction selon laquelle les objets s'approchent de la zone de travail ; et
un composant logique associé au contrôleur pour régler automatiquement une région de sécurité en vue de la vitesse ou de la direction déterminée des objets,
**caractérisé en ce que**
le contrôleur interagit avec les capteurs de temps de vol multiples pour surveiller les dimensions multiples pour la zone de travail, où les dimensions comportent des mouvements vers la zone de travail, des mouvements s'éloignant de la zone de travail, des mouvements depuis le dessus ou le dessous de la zone de travail et des mouvements vers les côtés ou la circonférence de la zone de travail, dans lequel au moins l'un des capteurs est monté sur des parties mobiles (730) de l'équipement.

8. Système de contrôle industriel selon la revendication 8, dans lequel le contrôleur active ou désactive l'équipement dans la zone de travail en se basant en partie sur l'objet entrant dans la zone de sécurité.

9. Système de contrôle industriel selon l'une quelconque des revendications 7 à 8, dans lequel le contrôleur surveille le mouvement d'une partie de l'équipement, et/ou
le contrôleur règle de façon dynamique des régions de sécurité dans la zone de travail sur la base de la vitesse ou de la direction de la partie de l'équipement, ou
le contrôleur surveille l'équipement et règle de façon dynamique une région de sécurité lorsque l'équipement mobile s'approche d'autres objets, ou
le contrôleur règle de façon dynamique la région de sécurité en se basant sur le mode de fonctionnement d'une machine.

10. Système de contrôle industriel selon la revendication 7, comprenant en outre un composant pour modifier le fonctionnement de l'équipement dans la zone de travail en se basant en partie sur l'objet entrant dans la zone de sécurité.

11. Système selon la revendication 7, dans lequel au moins un capteur de temps de vol est monté sur les parties mobiles de l'équipement.
